# EUROPÄISCHE PATENTSCHRIFT

(11) **EP 1 953 411 B1**
(45) Veröffentlichungstag und Bekanntmachung des Hinweises auf die Patenterteilung: **19.09.2018**
(21) Anmeldenummer: 08000441.9
(22) Anmeldetag: 11.01.2008
(51) Int. Cl.: F16F 15/134, F16F 15/131, F16F 15/16

(54) **Torsionsschwingungsdämpfer**
Torsion vibration damper
Amortisseur de vibrations de torsion

(30) Priorität: 31.01.2007 DE 102007004761
(43) Veröffentlichungstag der Anmeldung: 06.08.2008
(73) Patentinhaber: Schaeffler Technologies AG & Co. KG, 91074 Herzogenaurach (DE)
(72) Erfinder: Ineichen, Laurent, 67100 Strasbourg (FR); Kremer, Eugen, 77815 Bühl (DE); Reik, Wolfgang, Dr., 77815 Bühl (DE)

(56) Entgegenhaltungen:
- EP-A1- 0 863 330
- DE-B4- 3 745 088
- DE-C2- 3 645 381
- FR-A1- 2 660 038
- FR-A1- 2 663 387
- US-B1- 6 558 260

## Beschreibung

Die Erfindung betrifft einen Torsionsschwingungsdämpfer, insbesondere ein geteiltes Schwungrad, mit zwei Schwungmassen, die gegen den Widerstand einer ersten Energiespeichereinrichtung und/oder einer zweiten Energiespeichereinrichtung relativ zueinander verdrehbar sind, die parallel zu der ersten Energiespeichereinrichtung schaltbar ist. Dokument US-B1-6,558,260 offenbart einen solchen Torsionsschwingungsdämpfer.

Derartige Torsionsschwingungsdämpfer sind zum Beispiel zwischen den Antriebsmotor und das Getriebe eines Kraftfahrzeugs geschaltet. Im Betrieb des Antriebsmotors können Ungleichförmigkeiten auftreten, welche die primäre Schwungmasse zu Schwingungen anregen. Diese Schwingungen sollen nicht auf die sekundäre Schwungmasse übertragen werden, da sie in einem mit der sekundären Schwungmasse gekoppelten Getriebe zu Beschädigungen führen könnten.

Aufgabe der Erfindung ist es, einen Torsionsschwingungsdämpfer gemäß dem Oberbegriff des Anspruchs 1 zu schaffen, der es ermöglicht, im Betrieb auftretende Ungleichförmigkeiten schwingungstechnisch zu isolieren.

Die Aufgabe ist bei einem Torsionsschwingungsdämpfer, insbesondere einem geteilten Schwungrad, mit zwei Schwungmassen, die gegen den Widerstand einer ersten Energiespeichereinrichtung und/oder einer zweiten Energiespeichereinrichtung relativ zueinander verdrehbar sind, die parallel zu der ersten Energiespeichereinrichtung schaltbar ist, dadurch gelöst, dass die zweite Energiespeichereinrichtung durch ein hydraulisches System so mit einer der beiden Schwungmassen koppelbar ist, dass die zweite Energiespeichereinrichtung in ihrem Wirkbereich, insbesondere bei relativ kleinen Verdrehwinkeln, eine Schwingungen isolierende, insbesondere inverse oder degressive Wirkung entfaltet. Die beiden Schwungmassen sind mit Hilfe von Lagereinrichtungen relativ zueinander verdrehbar. Bei dem Antriebsmotor handelt es sich vorzugsweise um eine Brennkraftmaschine. Die beiden Energiespeichereinrichtungen dienen dazu, im Betrieb des Antriebsmotors auftretende, oszillierende Schwingungen nicht auf die Sekundärschwungmasse zu übertragen, die drehfest mit einer Getriebeeingangswelle verbunden sein kann. Die Erfindung liefert einen mechanischhydraulischen Torsionsschwingungsdämpfer, der Motormomentschwankungen filtert und ein Mittelmoment überträgt.

Ein bevorzugtes Ausführungsbeispiel des Torsionsschwingungsdämpfers ist dadurch gekennzeichnet, dass der Wirkbereich, in welchem die zweite Energiespeichereinrichtung ihre Schwingungen isolierende, insbesondere degressive oder inverse Wirkung entfaltet, mit Hilfe des hydraulischen Systems über dem Verdrehwinkel verstellbar ist. Beim Verstellen des Wirkbereichs können sich die beiden Schwungmassen insbesondere um große Verdrehwinkel gegeneinander verdrehen, ohne dass die zweite Energiespeichereinrichtung ihre degressive oder inverse Wirkung entfaltet. Die zweite Energiespeichereinrichtung wird durch das hydraulische System nachgeführt.

Ein weiteres bevorzugtes Ausführungsbeispiel des Torsionsschwingungsdämpfers ist dadurch gekennzeichnet, dass der Wirkbereich oder Arbeitsweg, in welchem die zweite Energiespeichereinrichtung ihre Schwingungen isolierende, insbesondere degressive oder inverse Wirkung entfaltet, mit Hilfe des hydraulischen Systems unabhängig vom Zustand der ersten Energiespeichereinrichtung im Wesentlichen konstant gehalten wird. Das liefert den Vorteil, dass die zweite Energiespeichereinrichtung nicht nachgeführt werden muss.

Ein weiteres bevorzugtes Ausführungsbeispiel des Torsionsschwingungsdämpfers ist dadurch gekennzeichnet, dass das hydraulische System so mit der ersten Energiespeichereinrichtung gekoppelt ist, dass der Wirkbereich oder Arbeitsweg der ersten Energiespeichereinrichtung mit Hilfe des hydraulischen Systems verstellbar ist. Gemäß einem wesentlichen Aspekt der Erfindung wird zum Beispiel ein Kompressionsweg der ersten Energiespeichereinrichtung mit Hilfe des hydraulischen Systems kompensiert.

Ein weiteres bevorzugtes Ausführungsbeispiel des Torsionsschwingungsdämpfers ist dadurch gekennzeichnet, dass das hydraulische System zu der ersten oder zweiten Energiespeichereinrichtung in Reihe geschaltet ist. Durch die Reihenschaltung mit der zweiten Energiespeichereinrichtung wird ein Nachführen der zweiten Energiespeichereinrichtung ermöglicht.

Ein weiteres bevorzugtes Ausführungsbeispiel des Torsionsschwingungsdämpfers ist dadurch gekennzeichnet, dass das hydraulische System eine Ventileinrichtung umfasst, die durch die Wirkung der zweiten Energiespeichereinrichtung gesteuert ist. Vorzugsweise wird die Ventileinrichtung durch eine im Betrieb auftretende Verformung einer degressiven oder inversen Federeinrichtung gesteuert.

Ein weiteres bevorzugtes Ausführungsbeispiel des Torsionsschwingungsdämpfers ist dadurch gekennzeichnet, dass das hydraulische System einen Aktor umfasst, der einen Druckanschluss, der mit einer hydraulischen Druckquelle in Verbindung steht, und einen Druckentlastungsanschluss aufweist, der mit einer hydraulischen Drucksenke in Verbindung steht. Bei der hydraulischen Druckquelle handelt es sich zum Beispiel um eine Hydraulikpumpe. Bei der hydraulischen Drucksenke handelt es sich zum Beispiel um einen Tank für Hydraulikmedium.

Ein weiteres bevorzugtes Ausführungsbeispiel des Torsionsschwingungsdämpfers ist dadurch gekennzeichnet, dass zwischen dem Druckanschluss und dem Druckentlastungsanschluss des Aktors ein Aktoranschluss angeordnet ist, der entweder mit dem Druckanschluss oder mit dem Druckentlastungsanschluss verbindbar ist. Der Aktoranschluss ist relativ zu dem Druckanschluss und dem Druckentlastungsanschluss bewegbar, oder umgekehrt.

Ein weiteres bevorzugtes Ausführungsbeispiel des Torsionsschwingungsdämpfers ist dadurch gekennzeichnet, dass der Aktoranschluss an der ersten oder zweiten Schwungmasse angebracht ist. Vorzugsweise steht der Aktoranschluss mit einem Arbeitsraum in Verbindung, in dem Hydraulikmedium angeordnet ist.

Ein weiteres bevorzugtes Ausführungsbeispiel des Torsionsschwingungsdämpfers ist dadurch gekennzeichnet, dass die zweite Energiespeichereinrichtung mit einer der Schwungmassen fest verbunden ist. Die zweite Energiespeichereinrichtung wird vorzugsweise fest mit der primären Schwungmasse verbunden, damit ein im Betrieb auftretender Anschlagimpuls nicht über die sekundäre Schwungmasse in ein dieser nachgeschaltetes Getriebe übertragen wird.

Ein weiteres bevorzugtes Ausführurigsbeispiel des Torsionsschwingungsdämpfers ist dadurch gekennzeichnet, dass die zweite Energiespeichereinrichtung so mit der anderen Schwungmasse gekoppelt ist, dass sich die andere Schwungmasse relativ zu der fest mit der zweiten Energiespeichereinrichtung verbundenen Schwungmasse um kleine Verdrehwinkel verdrehen kann. Dadurch wird ermöglicht, dass kleine, oszillierende Schwingungen nicht von der einen, insbesondere der primären, auf die andere, insbesondere die sekundäre, Schwungmasse übertragen werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figuren 1 bis 4: schematische Darstellungen eines Torsionsschwingungsdämpfers gemäß vier verschiedenen Ausführungsbeispielen der Erfindung;
- Figur 5: ein Gestaltungsbeispiel für einen erfindungsgemäßen Torsionsschwingungsdämpfer und
- Figur 6: eine Ausführungsform eines Anschlusses des in Figur 5 dargestellten Torsionsschwingungsdämpfers.

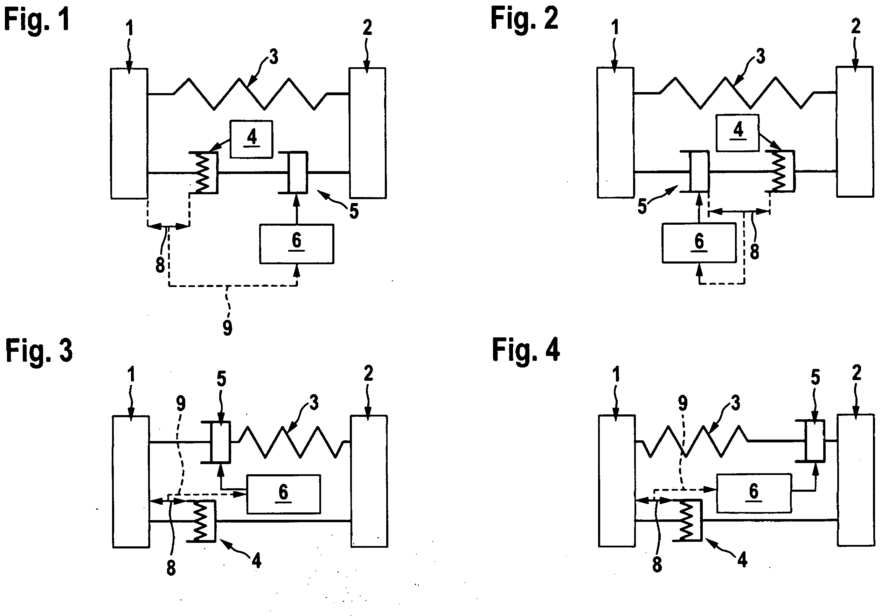

In den Figuren 1 bis 4 ist ein Torsionsschwingungsdämpfer in Form eines Zweimassenschwungrads dargestellt. Das Zweimassenschwungrad umfasst eine an einer Kurbelwelle einer Brennkraftmaschine eines Kraftfahrzeugs befestigbare primäre Schwungmasse 1, die auch als primäres Schwungrad bezeichnet wird. Eine sekundäre Schwungmasse 2 ist mit Hilfe einer (nicht dargestellten) Lagereinrichtung koaxial und relativ zu der primären Schwungmasse 1 verdrehbar gelagert. Die sekundäre Schwungmasse 2 wird auch als sekundäres Schwungrad bezeichnet. Die primäre Schwungmasse 1 ist über eine komprimierbare Energiespeicher aufweisende erste Energiespeichereinrichtung 3 antriebsmäßig mit der sekundären Schwungmasse 2 verbunden. Bei den Energiespeichern der ersten Energiespeichereinrichtung 3 handelt es sich vorzugsweise um mehrere längliche Schraubenfedern mit einem relativ großen Kompressionsweg. Eine zweite Energiespeichereinrichtung 4 ist parallel zu der ersten Energiespeichereinrichtung 3 geschaltet. Die zweite Energiespeichereinrichtung 4 umfasst mindestens eine degressive öder inverse Feder. Die degressive oder inverse Wirkung der zweiten Energiespeichereinrichtung 4 wirkt der Federwirkung der ersten Energiespeichereinrichtung 3 entgegen, um Schwingungen zu isolieren.

Bei dem in Figur 1 dargestellten Ausführungsbeispiel ist die zweite Energiespeichereinrichtung 4 in Reihe zwischen die primäre Schwungmasse 1 und einen Aktor 5 eines hydraulischen Systems 6 geschaltet. Der Aktor 5 wiederum ist in Reihe zwischen die zweite Energiespeichereinrichtung 4 und die sekundäre Schwungmasse 2 geschaltet. Durch einen Doppelpfeil 8 ist die Verformung der zweiten Energiespeichereinrichtung 4 im Betrieb angedeutet. Durch eine gestrichelte Linie 9 ist angedeutet, dass die Verformung 8 der zweiten Energiespeichereinrichtung 4 in dem hydraulischen System 6 zur Steuerung des Aktors 5 verwendet wird.

Der in Figur 1 dargestellte Torsionsschwingungsdämpfer funktioniert wie folgt. Als Ausgangspunkt wird ein Zustand betrachtet, bei dem ein statisches Eingangsmoment auf das primäre Schwungrad 1 wirkt und von der ersten Energiespeichereinrichtung 3, die auch als Hauptfeder bezeichnet wird, komplett auf das sekundäre Schwungrad 2 übertragen wird. Dabei befindet sich die zweite Energiespeichereinrichtung 4 in ihrer Ruhelage und erzeugt kein Moment. Wenn Motormomentschwankungen mit relativ hohen Frequenzen auftreten, dann wird die Gesamteinrichtung schwingen und funktioniert als Tiefpassfilter für Moment. Bezüglich der auftretenden Schwingungen wirken die erste Energiespeichereinrichtung 3 und die zweite Energiespeichereinrichtung 4 als insgesamt weiche Feder. Wenn das Mittelmoment quasi statisch steigt oder sinkt, dann neigt die zweite Energiespeichereinrichtung 4 dazu, aus ihrem Arbeitsbereich zu wandern. Gemäß einem Aspekt der Erfindung findet eine Nachstellung statt. Bei der Nachstellung wird durch das hydraulische System 6 der Druck in dem Aktor 5 so eingestellt, dass die zweite Energiespeichereinrichtung 4 in ihrem Arbeitsbereich bleibt.

Bei dem in Figur 2 dargestellten Ausführungsbeispiel ist der Aktor 5 in Reihe zwischen die primäre Schwungmasse 1 und die zweite Energiespeichereinrichtung 4 geschaltet. Die zweite Energiespeichereinrichtung 4 wiederum ist in Reihe zwischen den Aktor 5 und die sekundäre Schwungmasse 2 geschaltet.

Bei den in den Figuren 3 und 4 dargestellten Ausführungsbeispielen ist der Aktor 5 in Reihe mit der ersten Energiespeichereinrichtung 3 geschaltet. Bei dem in Figur 3 dargestellten Ausführungsbeispiel ist der Aktor 5 in Reihe zwischen die Primärschwungmasse 1 und die erste Energiespeichereinrichtung 3 geschaltet. Bei dem in Figur 4 dargestellten Ausführungsbeispiel ist der Aktor 5 in Reihe zwischen die erste Energiespeichereinrichtung 3 und die sekundäre Schwungmasse 2 geschaltet. Der Aktor 5 wird bei den in den Figuren 3 und 4 dargestellten Ausführungsbeispielen, wie bei den in den Figuren 1 und 2 dargestellten Ausführungsbeispielen, durch die Verformung der zweiten Energiespeichereinrichtung 4 über das hydraulische System 6 gesteuert.

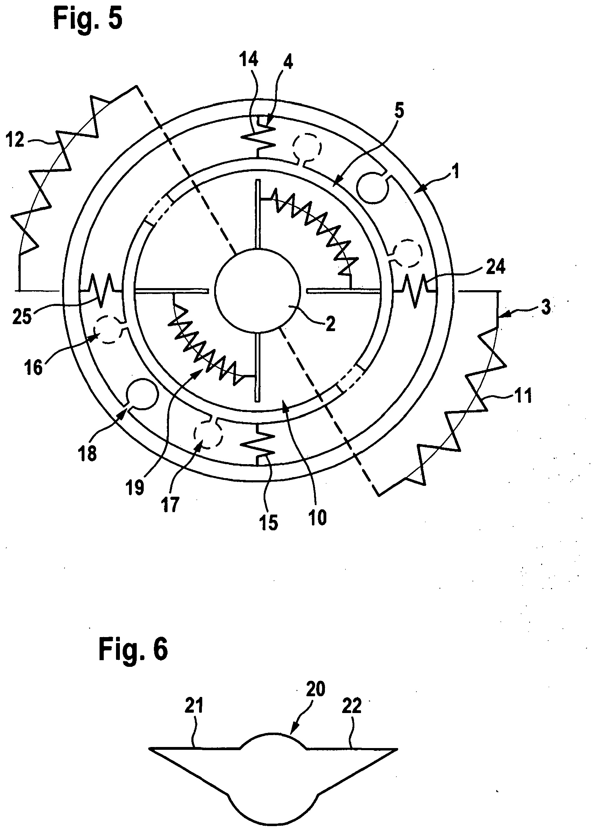

In Figur 5 ist ein Beispiel einer konstruktiven Umsetzung des in Figur 1 schematisch dargestellten Torsionsschwingungsdämpfers gezeigt. Ein primäres Schwungrad 1 und ein sekundäres Schwungrad 2 sind durch eine erste Energiespeichereinrichtung 3 miteinander gekoppelt. Die erste Energiespeichereinrichtung 3 umfasst zwei Hauptfedern 11 und 12. Das primäre Schwungrad 1 ist darüber hinaus durch eine zweite Energiespeichereinrichtung 4 mit einem Aktor 5 gekoppelt. Die zweite Energiespeichereinrichtung 4 umfasst vier radial angeordnete degressive Federn 14, 15, 24, 25. Der Aktor 5 ist in einem Arbeitsdruckraum 10 angeordnet, der mit Hydraulikmedium gefüllt ist. Darüber hinaus ist der Aktor 5 durch eine vorgespannte Ventilfedereinrichtung 19 mit dem sekundären Schwungrad 2 gekoppelt. Der Aktor 5 ist des Weiteren mit einem Druckentlastungsanschluss 16 und einem Druckanschluss 17 ausgestattet.

Der Druckentlastungsanschluss 16 steht mit einem Hydraulikmediumtank in Verbindung und wird daher auch als Tankanschluss bezeichnet. Der Druckanschluss 17 steht mit einer Energiequelle, insbesondere einer Hydraulikmediumquelle, in Verbindung und wird daher auch als Energiequellenanschluss bezeichnet. In Umfangsrichtung zwischen dem Druckentlastungsanschluss 16 und dem Druckanschluss 17 ist ein Aktoranschluss 18 angeordnet, der an dem primären Schwungrad 1 angebracht ist.

Der Arbeitsdruck in dem Arbeitsdruckraum 10 ändert sich nur, wenn der Aktoranschluss 18 den Tankanschluss 16 oder den Energiequellenanschluss 17 des Aktors 5 überdeckt. Wenn der Aktoranschluss 18 den Druckanschluss 17 überdeckt, dann steigt der Druck in den Arbeitsdruckraum 10. Wenn der Aktoranschluss 18 den Druckentlastungsanschluss 16 überdeckt, dann sinkt der Druck in dem Arbeitsdruckraum 10. Der Druckanstieg oder Druckabfall führt dazu, dass sich der Aktor 5 zusammen mit der zweiten Energiespeichereinrichtung 4 relativ zu dem primären Schwungrad 1 verschiebt oder verstellt.

Bei dem in Figur 5 dargestellten Ausführungsbeispiel sind die Anschlüsse 16 bis 18 kreisförmig ausgeführt. In Figur 6 ist ein Anschluss 20 angedeutet, der mit Steuerkerben 21, 22 ausgestattet ist. Dadurch wird verdeutlicht, dass die Anschlüsse (16 bis 18 in Figur 5) nicht kreisförmig ausgeführt sein müssen, sondern beliebig gestaltet werden können.

### Bezugszeichenliste

1. primäre Schwungmasse
2. sekundäre Schwungmasse
3. erste Energiespeichereinrichtung
4. zweite Energiespeichereinrichtung
5. Aktor
6. hydraulisches System
8. Doppelpfeil
9. gestrichelte Linie
10. Arbeitsdruckraum
11. Hauptfeder
12. Hauptfeder
14. degressive Feder
15. degressive Feder
16. Druckentlastungsanschluss
17. Druckanschtuss
18. Aktoranschluss
19. vorgespannte Ventilfeder
20. Anschluss
21. Steuerkerbe
22. Steuerkerbe
24. degressive Feder
25. degressive Feder

## Patentansprüche

1. Torsionsschwingungsdämpfer mit zwei Schwungmassen (1,2), die gegen den Widerstand einer ersten Energiespeichereinrichtung (3) und einer zweiten Energiespeichereinrichtung (4) relativ zueinander verdrehbar sind, die parallel zu der ersten Energiespeichereinrichtung (3) schaltbar ist, wobei die zweite Energiespeichereinrichtung (4) durch ein hydraulisches System (6) so mit einer der beiden Schwungmassen (1,2) koppelbar ist, dass die zweite Energiespeichereinrichtung (4) in ihrem Wirkbereich bei relativ kleinen Verdrehwinkeln eine Schwingungen isolierende inverse oder degressive Wirkung entfaltet.

2. Torsionsschwingungsdämpfer nach Anspruch 1, **dadurch gekennzeichnet, dass** der Wirkbereich, in welchem die zweite Energiespeichereinrichtung (4) ihre Schwingungen isolierende, degressive oder inverse Wirkung entfaltet, mit Hilfe des hydraulischen Systems (6) über dem Verdrehwinkel verstellbar ist.

3. Torsionsschwingungsdämpfer nach einem der vorhergehenden Ansprüche, **dadurch gekennzeichnet, dass** der Wirkbereich oder Arbeitsweg, in welchem die zweite Energiespeichereinrichtung (4) ihre Schwingungen isolierende, degressive oder inverse Wirkung entfaltet, mit Hilfe des hydraulischen Systems (6) unabhängig vom Zustand der ersten Energiespeichereinrichtung (3) im Wesentlichen konstant gehalten wird.

4. Torsionsschwingungsdämpfer nach dem vorhergehenden Anspruch, **dadurch gekennzeichnet, dass** das hydraulische System (6) so mit der ersten Energiespeichereinrichtung (3) gekoppelt ist, dass der Wirkbereich oder Arbeitsweg der ersten Energiespeichereinrichtung (3) mit Hilfe des hydraulischen Systems (6) verstellbar ist.

5. Torsionsschwingungsdämpfer nach einem der vorhergehenden Ansprüche, **dadurch gekennzeichnet, dass** das hydraulische System (6) zu der ersten oder zweiten Energiespeichereinrichtung (3,4) in Reihe geschaltet ist.

6. Torsionsschwingungsdämpfer nach einem der vorhergehenden Ansprüche, **dadurch gekennzeichnet, dass** das hydraulische System (6) eine Ventileinrichtung umfasst, die durch die Wirkung der zweiten Energiespeichereinrichtung (4) gesteuert ist.

7. Torsionsschwingungsdämpfer nach einem der vorhergehenden Ansprüche, **dadurch gekennzeichnet, dass** das hydraulische System (6) einen Aktor (5) umfasst, der einen Druckanschluss (17), der mit einer hydraulischen Druckquelle in Verbindung steht, und einen Druckentlastungsanschluss (16) aufweist, der mit einer hydraulischen Drucksenke in Verbindung steht.

8. Torsionsschwingungsdämpfer nach Anspruch 7, **dadurch gekennzeichnet, dass** zwischen dem Druckanschluss (17) und dem Druckentlastungsanschluss (16) des Aktors (5) ein Aktoranschluss (18) angeordnet ist, der entweder mit dem Druckanschluss (17) oder mit dem Druckentlastungsanschluss (16) verbindbar ist.

9. Torsionsschwingungsdämpfer nach dem vorhergehenden Anspruch, **dadurch gekennzeichnet, dass** der Aktoranschluss (18) an der ersten oder zweiten Schwungmasse (1,2) angebracht ist.

10. Torsionsschwingungsdämpfer nach einem der vorhergehenden Ansprüche, **dadurch gekennzeichnet, dass** die zweite Energiespeichereinrichtung (4) mit einer der Schwungmassen (1,2) fest verbunden ist.

11. Torsionsschwingungsdämpfer nach dem vorhergehenden Anspruch, **dadurch gekennzeichnet, dass** die zweite Energiespeichereinrichtung (4) so mit der anderen Schwungmasse (2,1) gekoppelt ist, dass sich die andere Schwungmasse (2,1) relativ zu der fest mit der zweiten Energiespeichereinrichtung (4) verbundenen Schwungmasse (1,2) um kleine Verdrehwinkel verdrehen kann.

## Claims

1. Torsional vibration damper having two flywheel masses (1, 2) which can be rotated relative to one another counter to the resistance of a first energy store device (3) and a second energy store device (4) which can be connected in parallel to the first energy store device (3), it being possible for the second energy store device (4) to be coupled by way of a hydraulic system (6) to one of the two flywheel masses (1, 2) in such a way that, in its active range at relatively small rotational angles, the second energy store device (4) develops an inverse or degressive action which isolates vibrations.

2. Torsional vibration damper according to Claim 1, **characterized in that** the active range, in which the second energy store device (4) develops its degressive or inverse action which isolates vibrations can be adjusted over the rotational angle with the aid of the hydraulic system (6).

3. Torsional vibration damper according to either of the preceding claims, **characterized in that** the active range or operating travel, in which the second energy store device (4) generates its degressive or inverse action which isolates vibrations is kept substantially constant with the aid of the hydraulic system (6) independently of the state of the first energy store device (3).

4. Torsional vibration damper according to the preceding claim, **characterized in that** the hydraulic system (6) is coupled to the first energy store device (3) in such a way that the active range or operating travel of the first energy store device (3) can be adjusted with the aid of the hydraulic system (6).

5. Torsional vibration damper according to one of the preceding claims, **characterized in that** the hydraulic system (6) is connected in series with respect to the first or second energy store device (3, 4).

6. Torsional vibration damper according to one of the preceding claims, **characterized in that** the hydraulic system (6) comprises a valve device which is controlled by way of the action of the second energy store device (4) .

7. Torsional vibration damper according to one of the preceding claims, **characterized in that** the hydraulic system (6) comprises an actuator (5) which has a pressure connector (17) which is connected to a hydraulic pressure source, and a pressure relief connector (16) which is connected to a hydraulic pressure sink.

8. Torsional vibration damper according to Claim 7, **characterized in that** an actuator connector (18) is arranged between the pressure connector (17) and the pressure relief connector (16) of the actuator (5), which actuator connector (18) can be connected either to the pressure connector (17) or to the pressure relief connector (16).

9. Torsional vibration damper according to the preceding claim, **characterized in that** the actuator connector (18) is attached to the first or second flywheel mass (1, 2).

10. Torsional vibration damper according to one of the preceding claims, **characterized in that** the second energy store device (4) is connected fixedly to one of the flywheel masses (1, 2).

11. Torsional vibration damper according to the preceding claim, **characterized in that** the second energy store device (4) is coupled to the other flywheel mass (2, 1) in such a way that the other flywheel mass (2, 1) can rotate by small rotational angles relative to the flywheel mass (1, 2) which is connected fixedly to the second energy store device (4).

## Revendications

1. Amortisseur de vibrations de torsion avec deux masses d'équilibrage (1, 2), qui peuvent tourner l'une par rapport à l'autre contre la résistance d'un premier dispositif d'accumulation d'énergie (3) et d'un second dispositif d'accumulation d'énergie (4), qui peut être commuté en parallèle avec le premier dispositif d'accumulation d'énergie (3), dans lequel le second dispositif d'accumulation d'énergie (4) peut être couplé par un système hydraulique (6) à une des deux masses d'équilibrage (1, 2), de telle manière que le second dispositif d'accumulation d'énergie (4) déploie dans sa plage d'action une action inverse ou dégressive isolant des vibrations pour des angles de rotation relativement petits.

2. Amortisseur de vibrations de torsion selon la revendication 1, **caractérisé en ce que** la plage d'action, dans laquelle le second dispositif d'accumulation d'énergie (4) déploie son action dégressive ou inverse isolant des vibrations, est réglable à l'aide du système hydraulique (6) au moyen de l'angle de rotation.

3. Amortisseur de vibrations de torsion selon l'une quelconque des revendications précédentes, **caractérisé en ce que** la plage d'action ou la course de travail, dans laquelle le second dispositif d'accumulation d'énergie (4) déploie son action dégressive ou inverse isolant des vibrations, est maintenue essentiellement constante à l'aide du système hydraulique (6) indépendamment de l'état du premier dispositif d'accumulation d'énergie (3) .

4. Amortisseur de vibrations de torsion selon la revendication précédente, **caractérisé en ce que** le système hydraulique (6) est couplé au premier dispositif d'accumulation d'énergie (3), de telle manière que la plage d'action ou la course de travail du premier dispositif d'accumulation d'énergie (3) soit réglable à l'aide du système hydraulique (6).

5. Amortisseur de vibrations de torsion selon l'une quelconque des revendications précédentes, **caractérisé en ce que** le système hydraulique (6) est commuté en série avec le premier ou avec le second dispositif d'accumulation d'énergie (3, 4).

6. Amortisseur de vibrations de torsion selon l'une quelconque des revendications précédentes, **caractérisé en ce que** le système hydraulique (6) comprend un dispositif de soupape, qui est commandé par l'action du second dispositif d'accumulateur d'énergie (4).

7. Amortisseur de vibrations de torsion selon l'une quelconque des revendications précédentes, **caractérisé en ce que** le système hydraulique (6) comprend un actionneur (5), qui présente un raccord de pression (17), qui est en communication avec une source de pression hydraulique, et un raccord de détente de pression (16), qui est en communication avec un puits de pression hydraulique.

8. Amortisseur de vibrations de torsion selon la revendication 7, **caractérisé en ce qu'**un raccord d'actionneur (18), qui peut être connecté soit au raccord de pression (17) soit au raccord de détente de pression (16), est disposé entre le raccord de pression (17) et le raccord de détente de pression (16) de l'actionneur (5) .

9. Amortisseur de vibrations de torsion selon la revendication précédente, **caractérisé en ce que** le raccord d'actionneur (18) est placé sur la première ou sur la seconde masse d'équilibrage (1, 2).

10. Amortisseur de vibrations de torsion selon l'une quelconque des revendications précédentes, **caractérisé en ce que** le second dispositif d'accumulation d'énergie (4) est relié fixement à une des masses d'équilibrage (1, 2) .

11. Amortisseur de vibrations de torsion selon la revendication précédente, **caractérisé en ce que** le second dispositif d'accumulation d'énergie (4) est couplé à l'autre masse d'équilibrage (2, 1), de telle manière que l'autre masse d'équilibrage (2, 1) puisse tourner de petits angles de rotation par rapport à la masse d'équilibrage (1, 2) reliée fixement au second dispositif d'accumulation d'énergie (4).
